(19) Europäisches Patentamt / European Patent Office / Office européen des brevets

(11) **EP 4 353 756 A1**

(12) **EUROPEAN PATENT APPLICATION**
published in accordance with Art. 153(4) EPC

(43) Date of publication:
**17.04.2024 Bulletin 2024/16**

(21) Application number: **22819908.9**

(22) Date of filing: **28.03.2022**

(51) International Patent Classification (IPC):
**C08F 220/04** (2006.01)     **C08F 220/12** (2006.01)
**C08F 220/18** (2006.01)     **C08F 220/32** (2006.01)
**C08F 220/54** (2006.01)     **C08F 222/40** (2006.01)
**C08K 5/00** (2006.01)     **C08L 33/06** (2006.01)

(52) Cooperative Patent Classification (CPC):
**C08F 220/04; C08F 220/12; C08F 220/18;
C08F 220/32; C08F 220/54; C08F 222/40;
C08K 5/00; C08L 33/06**

(86) International application number:
**PCT/JP2022/015021**

(87) International publication number:
**WO 2022/259720 (15.12.2022 Gazette 2022/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **11.06.2021   JP 2021098238
21.12.2021   JP 2021207124**

(71) Applicant: Osaka Soda Co., Ltd.
**Osaka-shi
Osaka 550-0011 (JP)**

(72) Inventors:
• **KAWAMURA, Mayu**
  **Osaka-shi, Osaka 550-0011 (JP)**
• **YANO, Tomoyuki**
  **Osaka-shi, Osaka 550-0011 (JP)**
• **YOSHIDA, Iori**
  **Osaka-shi, Osaka 550-0011 (JP)**
• **KITAGAWA, Motoki**
  **Osaka-shi, Osaka 550-0011 (JP)**
• **NAITOU, Masatsugu**
  **Osaka-shi, Osaka 550-0011 (JP)**

(74) Representative: **Vossius & Partner
Patentanwälte Rechtsanwälte mbB
Siebertstrasse 3
81675 München (DE)**

(54) **ACRYLIC COPOLYMER, ACRYLIC-COPOLYMER-CONTAINING COMPOSITION, AND CROSSLINKED ACRYLIC COPOLYMER**

(57)     The present invention relates to an acrylic copolymer, an acrylic copolymer-containing composition, and a crosslinked product thereof. More specifically, the present invention relates to a crosslinked product having good elongation at break even after long-term exposure to high temperatures. It has been found that when an acrylic copolymer is obtained by polymerizing a liquid mixture of an alkyl group-containing alkyl acrylate, an alkyl methacrylate, and a crosslinkable monomer, a crosslinked product of the acrylic copolymer has good elongation at break even after long-term exposure to high temperatures.

EP 4 353 756 A1

**Description**

TECHNICAL FIELD

The present invention relates to an acrylic copolymer, an acrylic copolymer-containing composition, and a crosslinked product thereof. More specifically, the present invention relates to a crosslinked product having excellent cold resistance and also having good elongation at break even after long-term exposure to high temperatures.

BACKGROUND ART

General acrylic copolymers are polymers made mainly from acrylates. They are known as materials having excellent durability-related physical properties and are widely used in industrial rubber materials or automotive rubber materials for engine gaskets, oil hoses, air hoses, O-rings, etc.

However, due to the higher performance of turbochargers with higher engine output and the recent stricter exhaust gas regulations, such automotive rubber components, especially those used in the engine compartment, have been required to provide further improvement in heat resistance, for example, only small changes in physical properties, especially elongation at break, even under long-term exposure to high temperatures.

In response to this situation, Patent Literature 1 presents an acrylic rubber having good balanced properties such as heat resistance and cold resistance, which consists of 20 to 35% by weight of ethyl methacrylate units, 0 to 20% by weight of ethyl acrylate units, 50 to 75% by weight of n-butyl acrylate units, and 0.5 to 4% by weight of carboxyl group-containing monomer units.

However, the test conditions (200°C × 336 hours) of the heat aging test in Patent Literature 1 cannot satisfy the required heat resistance under long-term exposure to high temperatures (elongation at break and rate of change thereof before and after the test), and it has been desirable to provide an acrylic copolymer having excellent performance even in harsher use environments.

CITATION LIST

PATENT LITERATURE

Patent Literature 1: WO2020/262495

SUMMARY OF INVENTION

TECHNICAL PROBLEM

The present invention aims to provide a crosslinked product having excellent elongation at break even after long-term exposure to high temperatures.

SOLUTION TO PROBLEM

As a result of various studies to achieve the aim, the present inventors have found that when an acrylic copolymer is obtained by polymerizing a liquid mixture of an alkyl-group containing alkyl acrylate, an alkyl methacrylate, and a crosslinkable monomer, a crosslinked product of the acrylic copolymer has good cold resistance and also has good elongation at break even after long-term exposure to high temperatures. Thus, they have completed the present invention. It should be noted that the crosslinked product may also be referred to as "crosslinked acrylic copolymer product".

Exemplary embodiments of the present invention are as follows.

Embodiment 1. An acrylic copolymer, containing: a structural unit (A) derived from a C1-C8 alkyl group-containing alkyl acrylate; and at least two types of structural units (B) each derived from a C1-C16 alkyl group-containing alkyl methacrylate, the units (B) being present in an amount of at least 15 mol% but not more than 55 mol% based on the total acrylic copolymer.

Embodiment 2. The acrylic copolymer according to Embodiment 1, containing a structural unit (C) derived from a crosslinkable monomer having a crosslinking group capable of reacting with a crosslinking agent.

Embodiment 3. The acrylic copolymer according to Embodiment 1 or 2, containing a structural unit (D) derived from a copolymerizable antioxidant.

Embodiment 4. An acrylic copolymer-containing composition, containing: the acrylic copolymer according to any one of Embodiments 1 to 3; and a crosslinking agent.

Embodiment 5. A crosslinked acrylic copolymer product, obtained by crosslinking the acrylic copolymer-containing composition according to Embodiment 4.

ADVANTAGEOUS EFFECTS OF INVENTION

The crosslinked product of the acrylic copolymer of the present invention maintains good elongation at break after long-term exposure to high temperatures and also has excellent cold resistance.

DESCRIPTION OF EMBODIMENTS

<Acrylic copolymer>

The acrylic copolymer of the present invention can be obtained by polymerizing a liquid mixture of a structural unit (A) derived from an alkyl acrylate and a structural unit (B) derived from an alkyl methacrylate. The acrylic copolymer preferably further contains at least two types of structural units each derived from an alkyl methacrylate.

The acrylic copolymer of the present invention contains a structural unit (A) derived from a C1-C8 alkyl group-containing alkyl acrylate and at least two types of structural units (B) each derived from a C1-C16 alkyl group-containing alkyl methacrylate, and the units (B) are present in an amount of at least 15 mol% but not more than 55 mol% based on the total acrylic copolymer. Thus, a crosslinked product of the acrylic copolymer (crosslinked acrylic rubber product) maintains good elongation at break after long-term exposure to high temperatures and also has excellent cold resistance. This is presumably because the presence of the unit (A) in combination with the at least two types of units (B) enables simultaneous improvement of cold resistance and heat resistance which are opposite properties, and therefore the crosslinked acrylic copolymer product (crosslinked acrylic rubber product) has excellent cold resistance and maintains good elongation at break after long-term exposure to high temperatures. Further, it has an excellent balance between cold resistance and heat resistance, which are contradictory properties, presumably due to the amount of units (B) within the above-described range.

The structural unit (A) derived from an alkyl acrylate in the present invention is preferably a structural unit derived from a C1-C8 alkyl group-containing alkyl acrylate, more preferably a structural unit derived from a C1-C6 alkyl group-containing alkyl acrylate, particularly preferably a structural unit derived from a C1-C4 alkyl group-containing alkyl acrylate.

Examples of the structural unit (A) derived from a C1-C8 alkyl group-containing alkyl acrylate include structural units derived from alkyl acrylates such as methyl acrylate, ethyl acrylate, n-propyl acrylate, isopropyl acrylate, n-butyl acrylate, isobutyl acrylate, n-pentyl acrylate, n-hexyl acrylate, n-heptyl acrylate, n-octyl acrylate, 2-ethylhexyl acrylate, and cyclohexyl acrylate. These structural units derived from alkyl acrylates may be used alone or in combinations of two or more. Among these, the structural unit is preferably a structural unit derived from methyl acrylate, ethyl acrylate, n-butyl acrylate, or 2-ethylhexyl acrylate, more preferably a structural unit derived from methyl acrylate, ethyl acrylate, or n-butyl acrylate, particularly preferably a structural unit derived from n-butyl acrylate.

In the acrylic copolymer of the present invention, the lower limit of the amount of structural units (A) derived from alkyl acrylates based on the total structural units of the acrylic copolymer is preferably 40 mol% or more, more preferably 45 mol% or more, still more preferably 50 mol% or more, particularly preferably 55 mol% or more, most preferably 60 mol% or more, further most preferably 63 mol% or more. The upper limit is preferably 80 mol% or less, more preferably 75 mol% or less, still more preferably 72 mol% or less, particularly preferably 70 mol% or less.

Herein, when the acrylic copolymer contains multiple structural units (A), the amount of structural units (A) refers to the total amount of the multiple structural units. The same applies to other structural units.

In the present invention, the structural unit (B) derived from an alkyl methacrylate is preferably a structural unit derived from a C1-C16 alkyl group-containing alkyl methacrylate, more preferably a structural unit derived from a C1-C12 alkyl group-containing alkyl methacrylate, still more preferably a structural unit derived from a C1-C8 alkyl group-containing alkyl methacrylate, particularly preferably a structural unit derived from a C1-C6 alkyl group-containing alkyl methacrylate, most preferably a structural unit derived from a C1-C4 alkyl group-containing alkyl methacrylate.

Examples of the structural unit (B) derived from a C1-C16 alkyl group-containing alkyl methacrylate include structural units derived from alkyl methacrylates such as methyl methacrylate, ethyl methacrylate, n-butyl methacrylate, ethoxyethyl methacrylate, methoxyethyl methacrylate, isobutyl methacrylate, n-pentyl methacrylate, n-hexyl methacrylate, n-octyl methacrylate, 2-ethylhexyl methacrylate, n-decyl methacrylate, isodecyl methacrylate, n-dodecyl methacrylate, n-lauryl methacrylate, n-octadecyl methacrylate, and isodecyl methacrylate, with methyl methacrylate, ethyl methacrylate, and n-butyl methacrylate being preferred among these.

In the acrylic copolymer of the present invention, these alkyl methacrylates may be used alone or in combinations of two or more, preferably in combinations of two or more. Two or more types of alkyl methacrylates may be combined according to the required properties. It is preferred to combine methyl methacrylate, which is expected to improve normal-state physical properties such as elongation at break, with another alkyl methacrylate. Specifically, the acrylic copolymer of the present invention preferably contains, as the unit (B), methyl methacrylate, more preferably methyl methacrylate and ethyl methacrylate and/or n-butyl methacrylate, still more preferably methyl methacrylate and n-butyl methacrylate. When the acrylic copolymer contains both methyl methacrylate and n-butyl methacrylate, the methyl methacrylate tends to further improve normal-state physical properties such as elongation at break, and the n-butyl methacrylate tends to further improve cold resistance.

In the acrylic copolymer of the present invention, the lower limit of the amount of structural units (B) derived from alkyl methacrylates based on the total structural units of the acrylic copolymer is preferably 15 mol% or more, more preferably 20 mol% or more, still more preferably 25 mol% or more, particularly preferably 30 mol% or more. The upper limit is preferably 55 mol% or less, more preferably 50 mol% or less, still more preferably 45 mol% or less, particularly preferably 40 mol% or less, most preferably 35 mol% or less. The amount of structural units derived from alkyl methacrylates within the above-described range is preferred in terms of the balance of normal-state physical properties such as elongation at break, cold resistance, and oil resistance.

However, when methyl methacrylate is used, the lower limit of the amount of structural units derived from methyl methacrylate based on the total structural units of the acrylic copolymer is preferably 5 mol% or more, more preferably 7 mol% or more, still more preferably 8 mol% or more, particularly preferably 10 mol% or more, most preferably 15 mol% or more. Moreover, the upper limit is preferably 40 mol% or less, more preferably 35 mol% or less, still more preferably 30 mol% or less. When the amount is less than the lower limit, the expected elongation at break may not be obtained, while when the amount is more than the upper limit, the resulting acrylic copolymer may become resinous rather than rubbery and no longer the acrylic copolymer of the present invention.

The acrylic copolymer of the present invention may contain a structural unit (C) derived from a crosslinkable monomer having a crosslinking group capable of reacting with a crosslinking agent. Examples of the type of crosslinking group include carboxy, epoxy, and halogen groups. Such structural units (C) derived from crosslinkable monomers having crosslinking groups capable of reacting with crosslinking agents may be used alone or in combinations of two or more. Preferred among these are structural units derived from crosslinkable monomers having carboxy groups as crosslinking groups.

Examples of structural units derived from crosslinkable monomers having carboxy groups as crosslinking groups include structural units derived from ethylenically unsaturated monocarboxylic acids such as methacrylic acid, acrylic acid, crotonic acid, 2-pentenoic acid, and cinnamic acid; structural units derived from ethylenically unsaturated dicarboxylic acids such as fumaric acid, maleic acid, and itaconic acid; and structural units derived from ethylenically unsaturated dicarboxylic acid monoesters, including monoalkyl fumarates such as monomethyl fumarate, monoethyl fumarate, monopropyl fumarate, monobutyl fumarate, monohexyl fumarate, and monooctyl fumarate, monoalkyl maleates such as monomethyl maleate, monoethyl maleate, monopropyl maleate, monobutyl maleate, monopentyl maleate, and monodecyl maleate, and monoalkyl itaconates such as monomethyl itaconate, monoethyl itaconate, monopropyl itaconate, and monobutyl itaconate. These may be used alone or in combinations of two or more. Preferred are structural units derived from ethylenically unsaturated dicarboxylic acid monoesters, with structural units derived from monoalkyl fumarates being more preferred, with structural units derived from C1-C4 alkyl group-containing monoalkyl fumarates being most preferred.

Examples of structural units derived from crosslinkable monomers having epoxy groups as crosslinking groups include structural units derived from epoxy group-containing (meth)acrylates such as glycidyl (meth)acrylate, structural units derived from epoxy group-containing styrenes such as p-vinylbenzyl glycidyl ether, structural units derived from epoxy group-containing ethers such as allyl glycidyl ether, vinyl glycidyl ether, 3,4-epoxy-1-pentene, 3,4-epoxy-1-butene, 4,5-epoxy-2-pentene, 4-vinylcyclohexyl glycidyl ether, cyclohexenyl methyl glycidyl ether, 3,4-epoxy-1-vinylcyclohexene, and allylphenyl glycidyl ether. These may be used alone or in combinations of two or more.

Examples of structural units derived from crosslinkable monomers having halogen groups as crosslinking groups include structural units derived from 2-chloroethyl vinyl ether, 2-chloroethyl acrylate, vinyl benzyl chloride, vinyl monochloroacetate, allyl chloroacetate, etc. These may be used alone or in combinations of two or more.

The lower limit of the amount of structural units (C) derived from crosslinkable monomers having crosslinking groups capable of reacting with crosslinking agents based on the total structural units in the acrylic copolymer of the present invention is preferably 0 mol% or more, more preferably 0.3 mol% or more, still more preferably 0.4 mol% or more. The upper limit is preferably 2 mol% or less, more preferably 1.5 mol% or less, still more preferably 1.2 mol% or less. The amount of structural units (C) derived from crosslinkable monomers having crosslinking groups capable of reacting with crosslinking agents within the above-described range is preferred in terms of physical properties such as strength and compression set and processability.

The acrylic copolymer of the present invention may contain a structural unit (D) derived from a copolymerizable antioxidant. The term "copolymerizable antioxidant" refers to an antioxidant attached with at least one substituent having an external double bond structure and/or an internal double bond structure. Such structural units (D) derived from copolymerizable antioxidants may be used alone or in combinations of two or more.

Examples of structural units derived from copolymerizable antioxidants include structural units derived from copolymerizable amine antioxidants such as N-(4-anilinophenyl)methacrylamide, N-(4-anilinophenyl)acrylamide, N-(4-anilinophenyl)maleimide, N-(4-p-toluidinylphenyl)maleimide, N-(4-anilino-1-naphthyl)maleimide, 4-hydroxyphenyl maleimide, and 3-hydroxyphenyl maleimide, and structural units derived from copolymerizable phenolic antioxidants such as 2-tert-butyl-4-methyl-6-(2-hydroxy-3-tert-butyl-5-methylbenzyl)phenyl acrylate, 1'-hydroxy[2,2'-ethylidenebis[4,6-bis(1,1-dimethylpropyl)benzen]]-1-yl acrylate, hydroxycinnamic acid, ferulic acid, and allyl cresol. In the present invention, structural units derived from copolymerizable amine antioxidants or structural units derived from copolymerizable phenolic antioxidants are preferred among the structural units derived from copolymerizable antioxidants, with structural units derived from copolymerizable amine antioxidants being more preferred.

In the acrylic copolymer of the present invention, the lower limit of the amount of structural units (D) derived from copolymerizable antioxidants based on the total structural units of the acrylic copolymer is preferably 0 mol% or more, more preferably 0.05 mol% or more, still more preferably 0.075 mol% or more, particularly preferably 0.1 mol% or more. Moreover, the upper limit is preferably 1.5 mol% or less, more preferably 1.0 mol% or less, still more preferably 0.5 mol% or less. The amount within the above-described range is preferred because then the heat resistance of the acrylic copolymer is improved.

In the acrylic copolymer of the present invention, the combined amount of structural units (A) derived from alkyl acrylates and structural units (B) derived from alkyl methacrylates based on the total structural units of the acrylic copolymer is preferably 70 mol% or more, more preferably 80 mol% or more, still more preferably 90 mol% or more, particularly preferably 95 mol% or more, while it may be 100 mol%, but is preferably 99 mol% or less. The combined amount within the above-described range is preferred because then the heat resistance of the acrylic copolymer is improved.

In the acrylic copolymer of the present invention, the combined amount of structural units (A) derived from alkyl acrylates, structural units (B) derived from alkyl methacrylates, structural units (C) derived from crosslinkable monomers having crosslinking groups capable of reacting with crosslinking agents, and structural units (D) derived from copolymerizable antioxidants based on the total structural units of the acrylic copolymer is preferably 70 mol% or more, more preferably 80 mol% or more, still more preferably 90 mol% or more, particularly preferably 95 mol% or more, most preferably 98 mol% or more, and may be 100 mol%. The combined amount within the above-described range is preferred because then the heat resistance of the acrylic copolymer is improved.

The acrylic copolymer of the present invention may further contain a copolymerizable monomer other than the above-described monomers as a structural unit of the acrylic copolymer without departing from the gist of the present invention. Examples of such other monomers include ethylenically unsaturated nitrile monomers, (meth)acrylamide monomers, aromatic vinyl monomers, conjugated diene monomers, non-conjugated diene monomers, and other olefin monomers. These may be used alone or in combinations of two or more.

Examples of ethylenically unsaturated nitrile monomers include acrylonitrile, methacrylonitrile, α-methoxyacrylonitrile, and vinylidene cyanide. These may be used alone or in combinations of two or more.

Examples of (meth)acrylamide monomers include acrylamide, methacrylamide, diacetone acrylamide, diacetone methacrylamide, N-butoxymethylacrylamide, N-butoxymethylmethacrylamide, N-butoxyethylacrylamide, N-butoxyethylmethacrylamide, N-methoxymethylacrylamide, N-methoxymethylmethacrylamide, N-propyoxymethylacrylamide, N-propyoxymethylmethacrylamide, N-methylacrylamide, N-methylmethacrylamide, N,N-dimethylacrylamide, N,N-dimethylmethacrylamide, N,N-diethylacrylamide, N,N-diethylmethacrylamide, N-methylolacrylamide, N-methylolmethacrylamide, ethacrylamide, crotonamide, cinnamic acid amide, maleic diamide, itaconic diamide, methyl maleamide, methyl itaconamide, maleimide, and itaconimide. These may be used alone or in combinations of two or more.

Examples of aromatic vinyl monomers include styrene, α-methylstyrene, o-methylstyrene, p-methylstyrene, o-ethylstyrene, p-ethylstyrene, α-fluorostyrene, p-trifluoromethylstyrene, p-methoxystyrene, p-aminostyrene, p-dimethylaminostyrene, p-acetoxystyrene, styrenesulfonic acid and salts thereof, α-vinylnaphthalene, 1-vinylnaphthalene-4-sulfonic acid and salts thereof, 2-vinylfluorene, 2-vinylpyridine, 4-vinylpyridine, divinylbenzene, diisopropenylbenzene, and vinylbenzyl chloride. These may be used alone or in combinations of two or more.

Examples of conjugated diene monomers include 1,3-butadiene, 2-methyl-1,3-butadiene, 2-chloro-1,3-butadiene, 1,2-dichloro-1,3-butadiene, 2,3-dichloro-1,3-butadiene, 2,3-dimethyl-1,3-butadiene, 2-neopentyl-1,3-butadiene, 2-bromo-1,3-butadiene, 2-cyano-1,3-butadiene, 1,3-pentadiene, 1,3-hexadiene, chloroprene, and piperylene. These may be used alone or in combinations of two or more.

Examples of non-conjugated diene monomers include 1,4-pentadiene, 1,4-hexadiene, ethylidene norbornene, norbornadiene, and dicyclopentadiene. These may be used alone or in combinations of two or more.

Examples of other olefin monomers include esters such as dicyclopentadienyl acrylate, dicyclopentadienyl methacrylate, dicyclopentadienylethyl acrylate, and dicyclopentadienylethyl methacrylate; and ethylene, propylene, vinyl chloride, vinylidene chloride, 1,2-dichloroethylene, vinyl acetate, vinyl fluoride, vinylidene fluoride, 1,2-difluoroethylene, vinyl bromide, vinylidene bromide, 1,2-dibromoethylene, ethyl vinyl ether, and butyl vinyl ether. These may be used alone or in combinations of two or more.

The amounts of the structural units in the acrylic copolymer of the present invention can be determined from the nuclear magnetic resonance spectrum of the obtained polymer.

<Method of producing acrylic copolymer>

The acrylic copolymer used in the present invention can be produced by polymerizing different monomers. The monomers used may each be commercially available and are not limited.

The mode of the polymerization reaction may be any of the following: emulsion polymerization, suspension polymerization, bulk polymerization, and solution polymerization. In view of ease in controlling the polymerization reaction and other factors, preferred is emulsion polymerization under a normal pressure, which is generally used in conventionally known acrylic copolymer production processes.

When the polymerization is performed by emulsion polymerization, it may be carried out by a usual method. Conventional and common polymerization initiators, emulsifiers, chain transfer agents, polymerization terminators, and other agents may be used.

Any emulsifier may be used in the present invention, including nonionic and anionic emulsifiers generally used in emulsion polymerization. Examples of nonionic emulsifiers include polyoxyethylene alkyl ethers, polyoxyethylene alcohol ethers, polyoxyethylene alkyl phenyl ethers, polyoxyethylene polycyclic phenyl ethers, polyoxyalkylene alkyl ethers, sorbitan fatty acid esters, polyoxyethylene fatty acid esters, and polyoxyethylene sorbitan fatty acid esters. Examples of anionic emulsifiers include alkylbenzene sulfonates, alkyl sulfates, polyoxyethylene alkyl ether sulfates, polyoxyalkylene alkyl ether phosphates and salts thereof, and fatty acid salts. One or two or more of these emulsifiers may be used. Typical examples of anionic emulsifiers include sodium dodecyl sulfate, sodium dodecylbenzene sulfonate, and triethanolamine dodecyl sulfate.

The amount of emulsifiers used in the present invention may be an amount generally used in emulsion polymerization. Specifically, the amount per 100 parts by mass of the monomers constituting the acrylic copolymer is in the range of 0.01 parts by mass to 10 parts by mass, preferably 0.03 parts by mass to 7 parts by mass, still more preferably 0.05 parts by mass to 5 parts by mass. When a reactive surfactant is used as a monomer component, it is not always necessary to add an emulsifier.

Any polymerization initiator may be used in the present invention, including polymerization initiators generally used in emulsion polymerization. Specific examples include inorganic polymerization initiators typified by persulfates such as potassium persulfate, sodium persulfate, and ammonium persulfate; organic peroxide polymerization initiators such as 2,2-di(4,4-di-(t-butylperoxy)cyclohexyl)propane, 1-di-(t-hexylperoxy)cyclohexane, 1,1-di-(t-butylperoxy)cyclohexane, n-butyl 4,4-di-(t-butylperoxy)valerate, 2,2-di(t-butylperoxy)butane, t-butyl hydroperoxide, cumene hydroperoxide, diisopropylbenzene hydroperoxide, p-menthane hydroperoxide, 1,1,3,3-tetramethylbutyl hydroperoxide, t-butyl cumyl peroxide, di-t-butyl peroxide, di-t-hexyl peroxide, di(2-t-butylperoxyisopropyl)benzene, dicumyl peroxide, diisobutyryl peroxide, di(3,5,5-trimethylhexanoyl)peroxide, dilauroyl peroxide, disuccinic acid peroxide, dibenzoyl peroxide, di(3-methylbenzoyl) peroxide, benzoyl(3-methylbenzoyl) peroxide, diisopropyl peroxydicarbonate, di-n-propyl peroxydicarbonate, di(4-t-butylcyclohexyl) peroxydicarbonate, di(2-ethylhexyl) peroxydicarbonate, di-sec-butyl peroxydicarbonate, cumyl peroxyneodecanoate, 1,1,3,3-tetramethylbutyl peroxyneodecanoate, t-hexyl peroxyneodecanoate, t-butyl peroxyneodecanoate, t-hexyl peroxypivalate, t-butyl peroxypivalate, 2,5-dimethyl-2,5-di(2-ethylhexanoylperoxy)hexane, 1,1,3,3-tetramethylbutyl peroxy-2-ethylhexanate, t-hexyl peroxy-2-ethylhexanate, t-butyl peroxy-2-ethylhexanate, t-butyl peroxylaurate, t-butyl peroxy-3,5,5-trimethylhexanate, t-hexyl peroxy isopropyl monocarbonate, t-butyl peroxy isopropyl monocarbonate, t-butyl peroxy-2-ethylhexyl monocarbonate, 2,5-dimethyl-2,5-di(benzoylperoxy)hexane, t-butyl peroxyacetate, t-hexyl peroxybenzoate, t-butyl peroxybenzoate, and 2,5-dimethyl-2,5-di(t-butylperoxy)hexane; hydroperoxides; and azo initiators such as azobisisobutyronitrile, 4-4'-azobis(4-cyanovaleric acid), 2-2'-azobis[2-(2-imidazolin-2-yl)propane, 2-2'-azobis(propane-2-carboamidine), 2-2'-azobis[N-(2-carboxyethyl)-2-methylpropaneamide, 2-2'-azobis{2-[1-(2-hydroxyethyl)-2-imidazolin-2-yl]propane}, 2-2'-azobis(1-imino-1-pyrrolidino-2-methylpropane), and 2-2'-azobis{2-methyl-N-[1,1-bis(hydroxymethyl)-2-hydroxyethyl]propaneamide}. These polymerization initiators may be used alone or in combinations of two or more.

The amount of polymerization initiators used in the present invention may be an amount generally used in emulsion polymerization. Specifically, the amount per 100 parts by mass of the monomers constituting the acrylic copolymer is in the range of 0.01 parts by mass to 5 parts by mass, preferably 0.015 parts by mass to 4 parts by mass, more preferably 0.02 parts by mass to 3 parts by mass.

Moreover, organic or inorganic peroxides as polymerization initiators may be combined with reductants and used as redox polymerization initiators. Non-limiting examples of reductants that may be used in combination include compounds containing reduced metal ions, such as ferrous sulfate and cuprous naphthenate; methane compounds such as sodium methanesulfonate, amine compounds such as dimethylaniline, ascorbic acid and salts thereof, and reducing inorganic salts such as alkali metal salts of sulfurous acid or thiosulfuric acid. These reductants may be used alone or in combinations of two or more. The amount of reductants per 100 parts by mass of the monomers constituting the acrylic copolymer is preferably 0.0003 to 10.0 parts by mass.

A chain transfer agent may be used as needed. Specific examples of chain transfer agents include alkyl mercaptans such as n-hexyl mercaptan, n-octyl mercaptan, t-octyl mercaptan, n-dodecyl mercaptan, t-dodecyl mercaptan, and n-stearyl mercaptan, 2,4-diphenyl-4-methyl-1-pentene, 2,4-diphenyl-4-methyl-2-pentene, xanthogen compounds such as dimethyl xanthogen disulfide and diisopropyl xanthogen disulfide, terpinolene, thiuram compounds such as tetramethylthiuram disulfide, tetraethylthiuram disulfide, and tetramethylthiuram monosulfide, phenolic compounds such as 2,6-di-t-butyl-4-methylphenol and styrenated phenol, allyl compounds such as allyl alcohol, halogenated hydrocarbon compounds such as dichloromethane, dibromomethane, and carbon tetrabromide, vinyl ethers such as $\alpha$-benzyloxystyrene, $\alpha$-benzyloxyacrylonitrile, and $\alpha$-benzyloxyacrylamide, triphenylethane, pentaphenylethane, acrolein, methacrolein, thioglycolic acid, thiomalic acid, and 2-ethylhexyl thioglycolate. One or two or more of these chain transfer agents may be used. Although the amount of these chain transfer agents is not limited, the amount used per 100 parts by mass of the monomers constituting the acrylic copolymer is usually 0 parts by mass to 5 parts by mass.

Examples of polymerization terminators include hydroxylamine, hydroxylamine sulfate, diethylhydroxyamine, hydroxyamine sulfonic acid and alkali metal salts thereof, sodium dimethyldithiocarbamate, and quinone compounds such as hydroquinone. Although the amount of polymerization terminators used is not limited, the amount per 100 parts by mass of the monomers constituting the acrylic copolymer is usually 0 parts by mass to 2 parts by mass.

Further, the pH of the polymer produced as described above may be adjusted using a base as a pH adjuster, if needed. Specific examples of bases include sodium hydroxide, potassium hydroxide, calcium hydroxide, sodium hydrogen carbonate, ammonia, inorganic ammonium compounds, and organic amine compounds. The pH is in the range of 1 to 11, preferably of 1.5 to 10.5, more preferably of 2 to 10.

In addition to the above components, polymerization auxiliary materials such as particle size modifiers, chelating agents, and oxygen scavengers may be used as needed.

Emulsion polymerization may be performed batchwise, semi-batchwise, or continuously. The polymerization time and the polymerization temperature are not limited and can be selected appropriately according to the type of polymerization initiator used or other factors. Generally, the polymerization temperature is 10°C to 100°C, and the polymerization time is 0.5 to 100 hours.

The polymer produced as described above may be collected by any method, including common methods. Such an exemplary method includes supplying continuously or batchwise the polymerization solution to a coagulant-containing aqueous solution. This operation provides a water-containing crumb. In this operation, the temperature of the coagulant-containing aqueous solution can be affected by the types and amounts of the monomers used and the coagulation conditions including the shear force generated by stirring or other means, and therefore cannot be uniformly specified. However, the temperature is generally 50°C to 100°C, preferably in the range of 60°C to 100°C.

Further, an antioxidant may be added during the coagulation step described above. Specific examples of antioxidants include phenolic antioxidants, amine antioxidants, phosphanol antioxidants, and hindered amine antioxidants.

Furthermore, the pH of the water-containing crumb obtained as described above may be adjusted using a base as a pH adjuster, if needed. Specific examples of bases include sodium hydroxide, potassium hydroxide, calcium hydroxide, sodium hydrogen carbonate, ammonia, inorganic ammonium compounds, and organic amine compounds. The pH is in the range of 1 to 11, preferably of 2 to 10, more preferably of 4 to 8.

The water-containing crumb obtained as described above is preferably subjected to water washing to remove the coagulant. If water washing is not performed at all or is insufficient, the ion residues derived from the coagulant may precipitate during the forming step.

The water-containing crumb after the water washing may be dehydrated and dried to obtain an acrylic copolymer. Although the drying may be carried out by any method, it is generally carried out using a flash dryer, a fluid dryer, or other dryers. Moreover, the drying step may be preceded by a dehydration step using a centrifuge or other devices.

In view of processability, the molecular weight range of the thus produced acrylic copolymer of the present invention is preferably 10 to 100, more preferably 15 to 90, still more preferably 20 to 80, as expressed by the Mooney viscosity ($ML_{1+4}$) at 100°C determined in a Mooney scorch test in accordance with JIS K 6300.

The glass transition temperature (Tg) of the copolymer of the present invention is preferably 0°C or lower, more preferably -5°C or lower, still more preferably -8°C or lower. The lower limit is not limited and may be - 60°C or higher, -50°C or higher, -40°C or higher, or -30°C or higher. The glass transition temperature (Tg) in the present invention is measured by differential scanning calorimetry (DSC).

<Acrylic copolymer-containing composition>

The acrylic copolymer-containing composition of the present invention can be obtained by containing the acrylic copolymer described above and at least a crosslinking agent.

Examples of the crosslinking agent include conventionally known crosslinking agents usually used for rubber crosslinking, such as polyvalent amine compounds, polyvalent epoxy compounds, polyvalent isocyanate compounds, aziridine compounds, sulfur compounds, basic metal oxides, and organic metal halides. Polyvalent amine compounds are suitable among these.

Examples of polyvalent amine compounds include aliphatic polyvalent amine compounds such as hexamethylenediamine, hexamethylenediamine carbamate, and N,N'-dicinnamylidene-1,6-hexanediamine; and aromatic polyvalent amine compounds such as 4,4'-methylenedianiline, m-phenylenediamine, 4,4'-diaminodiphenyl ether, 3,4'-diaminodiphenyl ether, 4,4'-(m-phenylenediisopropylidene)dianiline, 4,4'-(p-phenylenediisopropylidene)dianiline, 2,2'-bis[4-(4-aminophenoxy)phenyl]propane, 4,4'-diaminobenzanilide, 4,4'-bis(4-aminophenoxy)biphenyl, m-xylylenediamine, p-xylylenediamine, 1,3,5-benzenetriamine, 1,3,5-benzenetriaminomethyl, and isophthalic acid dihydrazide.

Examples of polyvalent epoxy compounds include phenol novolac epoxy compounds, cresol novolac epoxy compounds, cresol epoxy compounds, bisphenol A epoxy compounds, bisphenol F epoxy compounds, brominated bisphenol A epoxy compounds, brominated bisphenol F epoxy compounds, hydrogenated bisphenol A epoxy compounds, and other glycidyl ether epoxy compounds, alicyclic epoxy compounds, glycidyl ester epoxy compounds, glycidyl amine epoxy compounds, isocyanurate epoxy compounds, and other polyvalent epoxy compounds.

Examples of polyvalent isocyanate compounds include 2,4-tolylene diisocyanate, 2,6-tolylene diisocyanate, 4,4'-diphenylmethane diisocyanate, hexamethylene diisocyanate, p-phenylene diisocyanate, m-phenylene diisocyanate, 1,5-naphthylene diisocyanate, 1,3,6-hexamethylene triisocyanate, 1,6,11-undecane triisocyanate, and bicycloheptane triisocyanate.

Examples of aziridine compounds include tris-2,4,6-(1-aziridinyl)-1,3,5-triazine, tris[1-(2-methyl)aziridinyl]phosphinoxide, and hexa[1-(2-methyl)aziridinyl]triphosphatriazine.

Examples of sulfur compounds include sulfur, 4,4'-dithiomorpholine, tetramethylthiuram disulfide, and tetraethylthiuram disulfide.

Examples of basic metal oxides include zinc oxide, lead oxide, calcium oxide, and magnesium oxide.

Examples of organic metal halides include dicyclopentadienyl metal dihalides, and examples of such metals include titanium and zirconium.

These crosslinking agents may be used alone or in combinations of two or more. The amount of each crosslinking agent per 100 parts by mass of the acrylic copolymer of the present invention is 0.05 parts by mass to 20 parts by mass, preferably 0.1 parts by mass to 10 parts by mass.

Moreover, the acrylic copolymer-containing composition of the present invention may optionally contain other additives usually used in the art, including lubricants, antioxidants, photostabilizers, fillers, reinforcing agents, plasticizers, processing aids, pigments, colorants, crosslinking accelerators, crosslinking aids, crosslinking retardants, antistatic agents, and foaming agents.

Examples of reinforcing agents include carbon black. The amount thereof per 100 parts by mass of the acrylic copolymer is preferably 5 parts by mass or more, more preferably 10 parts by mass or more, still more preferably 30 parts by mass or more, while it is preferably 120 parts by mass or less, more preferably 100 parts by mass or less.

Examples of antioxidants include amine antioxidants, phosphate antioxidants, quinoline antioxidants, cresol antioxidants, phenolic antioxidants, and dithiocarbamate metal salts. Amine or phenolic antioxidants are preferred in the present invention. These may be used alone or in combinations of two or more.

Examples of amine antioxidants include phenyl-$\alpha$-naphthylamine, phenyl-$\beta$-naphthylamine, p-(p-toluene sulfonylamide)-diphenylamine, 4,4'-bis($\alpha,\alpha$-dimethylbenzyl)diphenylamine, N,N-diphenyl-p-phenylenediamine, N-isopropyl-N'-phenyl-p-phenylenediamine, and butyraldehyde-aniline condensates.

Examples of phenolic antioxidants include 2,6-di-t-butyl-4-methylphenol, 2,6-di-t-butylphenol, butylated hydroxyanisole, 2,6-di-t-butyl-$\alpha$-dimethylamino-p-cresol, octadecyl-3-(3,5-di-t-butyl-4-hydroxyphenyl)propionate, styrenated phenol, 2,2'-methylene-bis(6-$\alpha$-methyl-$\alpha$-benzyl-p-cresol), 4,4'-methylenebis(2,6-di-t-butylphenol), 2,2'-methylenebis(4-methyl-6-t-butylphenol), 2,4-bis[(octylthio)methyl]-6-methylphenol, 2,2'-thiobis-(4-methyl-6-t butylphenol), 4,4'-thiobis-(6-t-butyl-o-cresol), and 2,6-di-t-butyl-4-(4,6-bis(octylthio)-1,3,5-triazin-2-ylamino)phenol.

The amount of antioxidants per 100 parts by mass of the acrylic copolymer is preferably 0.1 to 10 parts by mass, more preferably 0.1 to 5 parts by mass, particularly preferably 0.3 to 3 parts by mass.

Examples of crosslinking accelerators include guanidine compounds, amine compounds, thiourea compounds, thiazole compounds, sulfenamide compounds, thiuram compounds, and quaternary ammonium salts, with guanidine or amine compounds being preferred. These may be used alone or in combinations of two or more.

The amount of crosslinking accelerators per 100 parts by mass of the acrylic copolymer is preferably 0.1 to 15 parts by mass, more preferably 0.1 to 10 parts by mass, particularly preferably 0.1 to 5 parts by mass.

Further, rubbers, resins, and the like usually used in the art may be blended without departing from the gist of the present invention. Examples of usual rubbers that may be used in the present invention include polybutadiene rubbers, styrene-butadiene rubbers, polyisoprene rubbers, natural rubbers, acrylonitrile-butadiene rubbers, acrylonitrile-butadiene-isoprene rubbers, ethylenepropylene-diene rubbers, and epichlorohydrin rubbers, and examples of resins include polymethyl methacrylate (PMMA) resins, polystyrene (PS) resins, polyurethane (PUR) resins, polyvinyl chloride (PVC) resins, ethylene/vinyl acetate (EVA) resins, styrene/acrylonitrile (AS) resins, and polyethylene (PE) resins. These may be used alone or in combinations of two or more.

The combined amount of these rubbers and resins per 100 parts by mass of the acrylic copolymer is 50 parts by mass or less, preferably 10 parts by mass or less, more preferably 1 part by mass or less.

<Crosslinked acrylic copolymer product (crosslinked acrylic rubber product)>

The crosslinked acrylic copolymer product of the present invention can be obtained by crosslinking the acrylic copolymer-containing composition described above.

To obtain the crosslinked acrylic copolymer product of the present invention, the acrylic copolymer-containing composition may be compounded using any means conventionally used in the field of rubber processing, such as an open roll mill, a Banbury mixer, or any of various kneaders. The compounding can be performed by usual procedures employed in the field of rubber processing. For example, the following procedure may be used: only a rubber is first kneaded, then compounding agents other than a crosslinking agent and a crosslinking accelerator are introduced to prepare an A-kneaded compound, and thereafter B-kneading is performed by introducing the crosslinking agent and the crosslinking accelerator.

The crosslinked acrylic copolymer product (crosslinked acrylic rubber product) of the present invention can be formed by heating the acrylic copolymer-containing composition to usually 100°C to 250°C. Although the crosslinking time depends on the temperature, it is usually 0.5 to 300 minutes. Crosslinking and forming may be performed in an integrated manner, or a previously formed product of the acrylic copolymer-containing composition may be reheated to form a crosslinked acrylic copolymer product. Alternatively, a crosslinked acrylic copolymer product obtained by previously heating the composition may be processed for forming. Specifically, the crosslinking and forming may be carried out by any method, including compression or injection molding using a mold, and heating using a steam can, an air bath, infrared rays, or microwaves.

The thus obtained acrylic copolymer-containing composition of the present invention has excellent roll processability during processing, and the crosslinked acrylic copolymer product of the present invention has excellent normal-state physical properties such as elongation at break and excellent heat resistance under long-term exposure to high temperatures.

Thus, by taking advantage of the above-described characteristics, the crosslinked acrylic copolymer product (crosslinked acrylic rubber product) of the present invention can be suitably used in O-rings, packings, diaphragms, oil seals, shaft seals, bearing seals, mechanical seals, wellhead seals, seals for electrical and electronic equipment, seals for pneumatic equipment, and various types of gaskets such as cylinder head gaskets which are mounted at a joint between a cylinder block and a cylinder head, rocker cover gaskets which are mounted at a joint between a rocker cover and a cylinder head, oil pan gaskets which are mounted at a joint between an oil pan and a cylinder block or transmission case, gaskets for fuel cell separators which are mounted between a pair of housings sandwiching a unit cell provided with a positive electrode, an electrolyte plate, and a negative electrode, and gaskets for top covers of hard disk drives.

Moreover, the crosslinked acrylic copolymer product of the present invention can be suitably used as extruded products or molded crosslinked products in automotive applications, for example, various hoses, including fuel oil hoses around fuel tanks such as fuel hoses, filler neck hoses, vent hoses, vapor hoses, and oil hoses; air hoses such as turbo air hoses and emission control hoses; radiator hoses, heater hoses, brake hoses, and air conditioner hoses.

EXAMPLES

The present invention will be specifically described with reference to, but not limited to, examples and comparative examples. In the examples and comparative examples, the physical properties of crosslinked acrylic copolymer products were evaluated, each of which was obtained by crosslinking an acrylic copolymer-containing composition containing an acrylic copolymer obtained in the production of an acrylic copolymer, and a crosslinking agent.

[Production Example 1] (Production of acrylic copolymer A)

A polymerization reactor equipped with a thermometer, a stirring apparatus, a nitrogen introduction tube, and a pressure reducing apparatus was charged with 200 parts by mass of water, 2.0 parts by mass of a polyoxyalkylene alkyl ether phosphate, 70.0 parts by mass (66.3 mol%) of n-butyl acrylate as the (A) component, 10.0 parts by mass (8.5 mol%) of n-butyl methacrylate and 20.0 parts by mass (24.2 mol%) of methyl methacrylate each as the (B) component, and 1.4 parts by mass (1.0 mol%) of monobutyl fumarate as the (C) component. Oxygen was thoroughly removed by repeating deaeration under reduced pressure and nitrogen replacement. Subsequently, 0.1 parts by mass of sodium ascorbate and 0.1 parts by mass of potassium persulfate were added, and an emulsion polymerization reaction was started at a normal temperature under a normal pressure. The reaction was continued until the polymerization conversion rate reached a predetermined value. Then, 0.0075 parts by mass of hydroquinone was added to terminate the polymerization. The resulting emulsion polymerization solution was coagulated with a 1.0% by mass magnesium sulfate aqueous solution, washed with water, and dried to obtain an acrylic copolymer A. The glass transition temperature and Mooney viscosity of the acrylic copolymer A were measured by the methods described below. Table 1 shows the results.

[Production Examples 2 to 13] (Production of acrylic copolymers B to M)

Acrylic copolymers B to M were obtained as in Production Example 1, except that the monomers and their ratio were changed to those shown in Table 1. The glass transition temperature and Mooney viscosity of the acrylic copolymers B to M were measured as in Production Example 1. Table 1 shows the results.

<Glass transition temperature>

The glass transition temperature (Tg) of the acrylic copolymers was measured with a differential scanning calorimeter (Perkin Elmer, model number: DSC8000) under conditions including a nitrogen atmosphere, a temperature range of -70°C to 20°C, and a temperature increase rate of 10°C/min.

<Mooney Viscosity ($ML_{1+4}$ at 100°C)>

The Mooney viscosity ($ML_{1+4}$) of the acrylic copolymers was measured at a measurement temperature of 100°C using Mooney Viscometer AM-3 (Toyo Seiki Seisaku-sho, Ltd.) in accordance with the Mooney viscosity test in the physical testing method for uncrosslinked rubber stipulated in JIS K 6300.

[Table 1]

| Component | Composition of acrylic copolymer | | Molecular weight | Pro. Ex. 1 | Pro. Ex. 2 | Pro. Ex. 3 | Pro. Ex. 4 | Pro. Ex. 5 | Pro. Ex. 6 | Pro. Ex. 7 | Pro. Ex. 8 | Pro. Ex. 9 | Pro. Ex. 10 | Pro. Ex. 11 | Pro. Ex. 12 | Pro. Ex. 13 |
|---|---|---|---|---|---|---|---|---|---|---|---|---|---|---|---|---|
| | | | | A | B | C | D | E | F | G | H | I | J | K | L | M |
| (A) | n-Butyl acrylate | (parts by mass) | 128.2 | 70.0 | 65.0 | 75.0 | 55.0 | 70.0 | 60.0 | 70.0 | 65.0 | 65.0 | 65.0 | 56.0 | 90.0 | 35.0 |
| | Ethyl acrylate | (parts by mass) | 100.1 | | | | | | | | 5.0 | | | | | |
| | Methyl acrylate | (parts by mass) | 86.0 | | | | | | 5.0 | | | | | | | |
| (B) | n-Butyl methacrylate | (parts by mass) | 142.2 | 10.0 | 15.0 | 5.0 | 25.0 | | 20.0 | | 10.0 | 10.0 | | | 5.0 | 25.0 |
| | Ethyl methacrylate | (parts by mass) | 114.1 | | | | | 15.0 | | 10.0 | 15.0 | 15.0 | | | | |
| | Methyl methacrylate | (parts by mass) | 100.1 | 20.0 | 20.0 | 20.0 | 20.0 | 15.0 | 15.0 | 20.0 | 5.0 | 10.0 | 35.0 | 44.0 | 5.0 | 40.0 |
| (C) | Monobutyl fumarate | (parts by mass) | 172.2 | 1.4 | 1.4 | 1.4 | 1.4 | 1.4 | 1.4 | 1.4 | 1.4 | 1.4 | 1.4 | 1.4 | 1.4 | 1.4 |

| Component | Composition of acrylic copolymer | | Molecular weight | Pro. Ex. 1 | Pro. Ex. 2 | Pro. Ex. 3 | Pro. Ex. 4 | Pro. Ex. 5 | Pro. Ex. 6 | Pro. Ex. 7 | Pro. Ex. 8 | Pro. Ex. 9 | Pro. Ex. 10 | Pro. Ex. 11 | Pro. Ex. 12 | Pro. Ex. 13 |
|---|---|---|---|---|---|---|---|---|---|---|---|---|---|---|---|---|
| | | | | A | B | C | D | E | F | G | H | I | J | K | L | M |
| (D) | N-(4-anilinophenyl) maleimide | (parts by mass) | 264.3 | | | 0.5 | 0.5 | 0.5 | | | | | | | 0.5 | |
| | 4-Hydroxyphenyl maleimide | (parts by mass) | 189.2 | | | | | | 0.5 | 0.5 | | | | | | |
| | 2-tert-Butyl-4-methyl-6-(2-hydroxy-3-tert-butyl-5-methylbenzyl) phenyl acrylate | (parts by mass) | 394.6 | | | | | | | | 0.5 | 0.5 | | | | 0.5 |
| | | | | | | | | | | | | | | | | |
| (A) | n-Butyl acrylate | (mol%) | | 66.3 | 61.8 | 70.5 | 52.7 | 65.2 | 56.6 | 64.7 | 62.0 | 62.0 | 58.6 | 49.4 | 88.1 | 31.8 |
| | Ethyl acrylate | (mol%) | | | | | | | | | 6.1 | | | | | |
| | Methyl acrylate | (mol%) | | | | | | | 7.0 | | | | | | | |
| (B) | n-Butyl methacrylate | (mol%) | | 8.5 | 12.9 | 4.2 | 21.6 | | 17.0 | | 8.6 | 8.6 | | | 4.4 | 20.5 |
| | Ethyl methacrylate | (mol%) | | | | | | 15.7 | | 10.4 | 16.1 | 16.1 | | | | |
| | Methyl methacrylate | (mol%) | | 24.2 | 24.3 | 24.1 | 24.5 | 17.9 | 18.1 | 23.7 | 6.1 | 12.2 | 40.4 | 49.7 | 6.3 | 46.6 |
| | Total amount of alkyl methacrylates | (mol%) | | 32.8 | 37.2 | 28.3 | 46.1 | 33.6 | 35.1 | 34.0 | 30.8 | 36.9 | 40.4 | 49.7 | 10.7 | 67.1 |
| (C) | Monobutyl fumarate | (mol%) | | 1.0 | 1.0 | 1.0 | 1.0 | 1.0 | 1.0 | 1.0 | 1.0 | 1.0 | 0.9 | 0.9 | 1.0 | 0.9 |

EP 4 353 756 A1

12

(continued)

| Component | Composition of acrylic copolymer | | Molecular weight | Pro. Ex. 1 | Pro. Ex. 2 | Pro. Ex. 3 | Pro. Ex. 4 | Pro. Ex. 5 | Pro. Ex. 6 | Pro. Ex. 7 | Pro. Ex. 8 | Pro. Ex. 9 | Pro. Ex. 10 | Pro. Ex. 11 | Pro. Ex. 12 | Pro. Ex. 13 |
|---|---|---|---|---|---|---|---|---|---|---|---|---|---|---|---|---|
| | | | | A | B | C | D | E | F | G | H | I | J | K | L | M |
| (D) | N-(4-anilinophenyl) maleimide | (mol%) | | | | 0.2 | 0.2 | 0.2 | | | | | | | 0.2 | |
| | 4-Hydroxyphenyl maleimide | (mol%) | | | | | | | 0.3 | 0.3 | | | | | | |
| | 2-tert-Butyl-4-methyl-6-(2-hydroxy-3-tert-butyl-5-methylbenzyl) phenyl acrylate | (mol%) | | | | | | | | | 0.2 | 0.2 | | | | 0.1 |
| | | | | | | | | | | | | | | | | |
| | Tg (°C) of polymer | | | -19.4 | -15.1 | -21.3 | -9.9 | -20.7 | -13.5 | -19.9 | -19.6 | -18.2 | 3.6 | 9.6 | -37.4 | 52.3 |
| | Mooney viscosity (ML$_{1+4}$, 100°C) of polymer | | | 27.0 | 34.0 | 28.0 | 34.0 | 31.0 | 37.6 | 40.3 | 25.8 | 28.1 | 41.0 | 57.0 | 35.4 | 68.3 |
| Pro. Ex.: Production Example | | | | | | | | | | | | | | | | |

[Example 1]

An amount of 100 parts by mass of the acrylic copolymer A, 60 parts by mass of carbon black (classification according to ASTM D1765; N550), 2 parts by mass of stearic acid (dispersing agent for carbon black, softener), and 2 parts by mass of 4,4'-bis($\alpha,\alpha$-dimethylbenzyl)diphenylamine (antioxidant) were kneaded with a kneader at 120°C. Subsequently, 0.6 parts by mass of hexamethylenediamine carbamate (aliphatic diamine crosslinking agent) and 2 parts by mass of di-o-tolylguanidine (crosslinking accelerator) were added, followed by kneading with kneading rolls at room temperature. Next, the resulting mixture was kneaded with a kneader and an open roll to obtain a 2 to 2.5 mm-thick sheet of an acrylic copolymer-containing composition. The obtained uncrosslinked sheet was pressed at 180°C for 10 minutes and then heated in an air oven at 180°C for three hours to obtain a crosslinked acrylic copolymer product (crosslinked acrylic rubber product). The obtained crosslinked product was subjected to a cold resistance test and a heat aging resistance test as described below. Table 2 shows the results.

[Examples 2 to 9, Comparative Examples 1 to 4]

A sheet of an acrylic copolymer-containing composition was obtained by kneading and forming an acrylic copolymer as in Example 1, except that the acrylic copolymer A was changed to one of the acrylic copolymers B to I (Examples 2 to 9) and the acrylic copolymers J to M (Comparative Examples 1 to 4). A crosslinked acrylic copolymer product was obtained as in Example 1 and subjected to a cold resistance test and a heat aging resistance test as described below. Table 2 shows the results.

<Cold resistance test>

A cold resistance test was performed by a TR test in accordance with JIS K 6261. A test piece was prepared by punching out a test piece having a length of 5.0 $\pm$ 0.2 mm, a width of 2.0 $\pm$ 0.2 mm, and a thickness of 2.0 $\pm$ 0.2 mm from the sheet of the crosslinked acrylic copolymer product obtained in each example or comparative example. The test was carried out using a low-temperature retraction tester (Yasuda Seiki Seisakusho, Ltd.) to determine the temperature at which the temperature-shrinkage curve reached 10% (hereinafter, referred to as TR10), which was then evaluated according to the following criteria. Generally, the lower the TR10 value, the better the cold resistance.

Evaluation Criteria
Excellent ($\infty$): -15°C or lower
Good ($\circ$): higher than -15°C but lower than 0°C
Bad ($\times$): 0°C or higher or unmeasurable

<Heat aging resistance test>

A test piece was prepared by punching out a No. 3 dumbbell from the sheet of the crosslinked acrylic copolymer product obtained in each example or comparative example in accordance with JIS K 6251. The elongation at break (elongation at break before test) of the test piece was measured with AGS-5KNY (Shimadzu Corporation). Next, a test piece was prepared again from the same crosslinked acrylic copolymer product and then allowed to stand in a Geer oven at 200°C for 400 hours. Thereafter, the elongation at break (elongation at break after test) of the test piece (test piece after long-term exposure to high temperatures) was measured. The measurements of elongation at break before and after the test were compared to evaluate the heat aging resistance. The product is suitable for use in high temperature environments if the elongation at break after test is 100% or more, and also the absolute value of the rate of change in elongation at break before and after the test (hereinafter, referred to as the rate of change) is small. In contrast, if the rate of change in elongation at break after the test is small, but the elongation at break is less than 100%, the product is not suitable for use in high temperature environments because the crosslinked product itself is so hard that cracks and other defects can be easily produced by vibration or impact. The evaluation of the heat aging resistance test was based on the following criteria. The rate of change was also calculated by the equation below.

Evaluation criteria
Excellent (oo): The elongation at break after test is 100% or more and the rate of change is less than 60%.
Good (o): The elongation at break after test is 100% or more and the rate of change is at least 60% but not more than 70%.
Bad ($\times$): The elongation at break after test is 100% or more and the rate of change is more than 70%, or the elongation at break after test is 100% or less or unmeasurable.

Rate of change (%) = |(Elongation at break after test)-(Elongation at break before test)|/(Elongation at break before test) × 100

[Table 2]

| | | | Example 1 | Example 2 | Example 3 | Example 4 | Example 5 | Example 6 | Example 7 | Example 8 | Example 9 | Comparative Example 1 | Comparative Example 2 | Comparative Example 3 | Comparative Example 4 |
|---|---|---|---|---|---|---|---|---|---|---|---|---|---|---|---|
| Acrylic copolymer composition | Acrylic copolymer A | (parts by mass) | 100 | | | | | | | | | | | | |
| | Acrylic copolymer B | (parts by mass) | | 100 | | | | | | | | | | | |
| | Acrylic copolymer C | (parts by mass) | | | 100 | | | | | | | | | | |
| | Acrylic copolymer D | (parts by mass) | | | | 100 | | | | | | | | | |
| | Acrylic copolymer E | (parts by mass) | | | | | 100 | | | | | | | | |
| | Acrylic copolymer F | (parts by mass) | | | | | | 100 | | | | | | | |
| | Acrylic copolymer G | (parts by mass) | | | | | | | 100 | | | | | | |
| | Acrylic copolymer H | (parts by mass) | | | | | | | | 100 | | | | | |
| | Acrylic copolymer I | (parts by mass) | | | | | | | | | 100 | | | | |
| | Acrylic copolymer J | (parts by mass) | | | | | | | | | | 100 | | | |
| | Acrylic copolymer K | (parts by mass) | | | | | | | | | | | 100 | | |
| | Acrylic copolymer L | (parts by mass) | | | | | | | | | | | | 100 | |
| | Acrylic copolymer M | (parts by mass) | | | | | | | | | | | | | 100 |
| | Carbon black N550 | (parts by mass) | 60 | 60 | 60 | 60 | 60 | 60 | 60 | 60 | 60 | 60 | 60 | 60 | 60 |
| | Stearic acid | (parts by mass) | 2 | 2 | 2 | 2 | 2 | 2 | 2 | 2 | 2 | 2 | 2 | 2 | 2 |
| | 4,4'-Bis(α,α'-dimethylbenzene)-diphenylamine | (parts by mass) | 2 | 2 | 2 | 2 | 2 | 2 | 2 | 2 | 2 | 2 | 2 | 2 | 2 |
| | Hexamethylenediamine carbamate | (parts by mass) | 0.6 | 0.6 | 0.6 | 0.6 | 0.6 | 0.6 | 0.6 | 0.6 | 0.6 | 0.6 | 0.6 | 0.6 | 0.6 |
| | Di-o-tolylguanidine | (parts by mass) | 2 | 2 | 2 | 2 | 2 | 2 | 2 | 2 | 2 | 2 | 2 | 2 | 2 |
| Cold resistance test | TR10 | | ◎ | ○ | ◎ | ○ | ◎ | ◎ | ○ | ◎ | ◎ | ○ | × | ◎ | × |
| Heat aging resistance test | Before test | % | 295 | 370 | 306 | 388 | 267 | 345 | 338 | 286 | 329 | 288 | - | 240 | - |
| | After test | % | 102 | 145 | 102 | 172 | 117 | 103 | 100 | 105 | 125 | 80 | - | 73 | - |
| | Rate of change | (Δ%) | 65 | 61 | 67 | 56 | 56 | 70 | 70 | 63 | 62 | 72 | - | 70 | - |
| | Evaluation | | ○ | ○ | ○ | ◎ | ◎ | ○ | ○ | ○ | ○ | × | × | × | × |

The results in Table 2 show that Examples 1 to 9 using acrylic copolymers of the present invention have better heat aging resistance than the comparative examples. The acrylic copolymers obtained in Comparative Examples 2

16

and 4 were resinous rather than rubbery and could not be subjected to the evaluation itself. These results show that the crosslinked acrylic copolymer products of the present invention prepared with at least two types of alkyl methacrylates are excellent in cold resistance and heat resistance without losing elongation even after long-term exposure to high temperatures. Thus, it is demonstrated that the acrylic copolymers of the present invention have excellent cold resistance, and the crosslinked acrylic copolymer products maintain good elongation at break after long-term exposure to high temperatures.

INDUSTRIAL APPLICABILITY

Taking advantage of the excellent heat resistance, the acrylic copolymer of the present invention can be widely used as a material for rubber products or resin products or as a raw material of adhesives or paints. In particular, a crosslinked product prepared with the acrylic copolymer of the present invention is very effective in applications such as industrial rubber materials and automotive rubber materials, including engine gaskets, oil hoses, air hoses, O-rings, etc.

**Claims**

1.    An acrylic copolymer, comprising:

a structural unit (A) derived from a C1-C8 alkyl group-containing alkyl acrylate; and
at least two types of structural units (B) each derived from a C1-C16 alkyl group-containing alkyl methacrylate, the units (B) being present in an amount of at least 15 mol% but not more than 55 mol% based on the total acrylic copolymer.

2.    The acrylic copolymer according to claim 1, comprising a structural unit (C) derived from a crosslinkable monomer having a crosslinking group capable of reacting with a crosslinking agent.

3.    The acrylic copolymer according to claim 1 or 2, comprising a structural unit (D) derived from a copolymerizable antioxidant.

4.    An acrylic copolymer-containing composition, comprising:

the acrylic copolymer according to any one of claims 1 to 3; and
a crosslinking agent.

5.    A crosslinked acrylic copolymer product, obtained by crosslinking the acrylic copolymer-containing composition according to claim 4.

**EP 4 353 756 A1**

## INTERNATIONAL SEARCH REPORT

International application No.

**PCT/JP2022/015021**

### A. CLASSIFICATION OF SUBJECT MATTER

*C08F 220/04*(2006.01)i; *C08F 220/12*(2006.01)i; *C08F 220/18*(2006.01)i; *C08F 220/32*(2006.01)i; *C08F 220/54*(2006.01)i; *C08F 222/40*(2006.01)i; *C08K 5/00*(2006.01)i; *C08L 33/06*(2006.01)i
FI: C08F220/12; C08F220/04; C08F220/32; C08F220/54; C08F222/40; C08L33/06; C08K5/00; C08F220/18

According to International Patent Classification (IPC) or to both national classification and IPC

### B. FIELDS SEARCHED

Minimum documentation searched (classification system followed by classification symbols)

C08F220/04; C08F220/12; C08F220/18; C08F220/32; C08F220/54; C08F222/40; C08K5/00; C08L33/06

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| X | JP 61-035883 A (DAINIPPON INK & CHEMICALS INC.) 20 February 1986 (1986-02-20) claims, p. 2, lower left column, lines 10-15, examples | 1, 2, 4, 5 |
| X | WO 2020/262496 A1 (NIPPON ZEON CO.) 30 December 2020 (2020-12-30) claims, paragraphs [0015]-[0120], [0164] | 1, 2, 4, 5 |
| X | JP 9-094522 A (MITSUBISHI RAYON CO., LTD.) 08 April 1997 (1997-04-08) claims, paragraphs [0016], [0026], [0029], examples | 1, 2, 4, 5 |
| X | JP 2003-003321 A (IPPOSHA OIL INDUSTRIES CO., LTD.) 08 January 2003 (2003-01-08) claims, examples | 1, 3 |
| A | WO 2021/054045 A1 (OSAKA SODA CO., LTD.) 25 March 2021 (2021-03-25) entire text | 1-5 |
| A | JP 2006-213852 A (ASAHI KASEI CHEMICALS CORP.) 17 August 2006 (2006-08-17) entire text | 1-5 |

☑ Further documents are listed in the continuation of Box C.      ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 07 June 2022 | 21 June 2022 |

| Name and mailing address of the ISA/JP | Authorized officer |
|---|---|
| Japan Patent Office (ISA/JP) 3-4-3 Kasumigaseki, Chiyoda-ku, Tokyo 100-8915 Japan | |
| | Telephone No. |

Form PCT/ISA/210 (second sheet) (January 2015)

**INTERNATIONAL SEARCH REPORT**

| International application No. |
|---|
| **PCT/JP2022/015021** |

**C.    DOCUMENTS CONSIDERED TO BE RELEVANT**

| Category* | Citation of document, with indication, where appropriate, of the relevant passages | Relevant to claim No. |
|---|---|---|
| A | JP 2006-213853 A (ASAHI KASEI CHEMICALS CORP.) 17 August 2006 (2006-08-17) entire text | 1-5 |

Form PCT/ISA/210 (second sheet) (January 2015)

INTERNATIONAL SEARCH REPORT
Information on patent family members

International application No.

**PCT/JP2022/015021**

| Patent document cited in search report | | | Publication date (day/month/year) | Patent family member(s) | Publication date (day/month/year) |
|---|---|---|---|---|---|
| JP | 61-035883 | A | 20 February 1986 | (Family: none) | |
| WO | 2020/262496 | A1 | 30 December 2020 | (Family: none) | |
| JP | 9-094522 | A | 08 April 1997 | (Family: none) | |
| JP | 2003-003321 | A | 08 January 2003 | (Family: none) | |
| WO | 2021/054045 | A1 | 25 March 2021 | (Family: none) | |
| JP | 2006-213852 | A | 17 August 2006 | (Family: none) | |
| JP | 2006-213853 | A | 17 August 2006 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020262495 A